# EUROPEAN PATENT APPLICATION

(11) **EP 4 070 914 A1**
(43) Date of publication of application: **12.10.2022**
(21) Application number: 21167665.5
(22) Date of filing: 09.04.2021
(51) Int. Cl.: B24B 19/14, B24B 41/00, B24B 41/06, B66C 1/10, F03D 13/40

(54) **SYSTEM FOR HANDLING A STRUCTURAL MEMBER OF A BLADE OF A WIND TURBINE**

(71) Applicant: LM Wind Power A/S, 6000 Kolding (DK)
(72) Inventor: BOON, Christopher, 6000 Kolding (DK); NIELSEN, Søren Eg, 6000 Kolding (DK)
(74) Representative: Zimmermann & Partner Patentanwälte mbB

(57) **Abstract**

A system (50) for handling a structural member (44) of a blade (10) of a wind turbine (2), comprising a member support (52) configured for supporting the structural member (44), and a plurality of member turning devices (60) positioned along a longitudinal axis (54) of the member support (52), the plurality of member turning devices (60) being connected to the member support (52) and configured for turning the structural member (44).

## Description

### FIELD

The present subject matter generally relates to blades of a wind turbine, particularly to a system for handling a structural member of a blade of a wind turbine, and to a method of handling a structural member of a blade of a wind turbine.

### BACKGROUND

Wind power provides a clean and environmentally friendly source of energy. Modern wind turbines usually include a tower, a generator, a gearbox, a nacelle, a rotor hub and one or more blades mounted to the rotor hub. Wind turbine blades capture kinetic energy of wind using known foil principles. Modern wind turbines may have blades that exceed 90 meters in length.

Wind turbine blades are usually manufactured by forming two shell halves from layers of woven fabric and resin. Spar caps or main laminates are placed or integrated in the shell halves and are combined with shear webs or beams to form a spar of the blade. Spar caps or main laminates may be joined to, or integrated within, the inside of the suction and pressure halves of the shell.

The manufacturing process of a blade often includes pre-forming structural members such as spar caps or shear webs separately from the shell halves of the blade. The separately formed structural members can weigh several tons and may need post-processing or inspection before the structural members are joined to other parts of the blade. Typically, the separately formed structural members are handled using an overhead crane.

However, the use of the overhead crane may interfere with other manufacturing operations, for example due to the high demand for the overhead crane in blade production or due to safety considerations limiting operator presence under suspended loads lifted by the overhead crane.

Accordingly, the present disclosure is directed to a system for handling a structural member of a blade of a wind turbine in blade manufacturing processes, particularly for inspection and/or post-processing of a structural member.

### BRIEF DESCRIPTION

Aspects and advantages of the invention will be set forth in part in the following description, or may be obvious from the description, or may be learned through practice of the invention.

In one aspect, the present disclosure is directed to a system for handling a structural member of a blade of a wind turbine. The system includes a member support configured for supporting the structural member, and a plurality of member turning devices positioned along a longitudinal axis of the member support, the plurality of member turning devices being connected to the member support and configured for turning the structural member. It should be understood that the system may further include any of the additional features as described herein.

In another aspect, the present disclosure is directed to a method of handling a structural member of a blade of a wind turbine. The method includes supporting the structural member on a member support, and turning the structural member using a plurality of member turning devices positioned along a longitudinal axis of the member support, the plurality of member turning devices being connected to the member support. It should be understood that the method may further include any of the additional steps and/or features as described herein.

These and other features, aspects and advantages of the present invention will be further supported and described with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of a wind turbine;
FIG. 2 illustrates a schematic view of a blade of a wind turbine;
FIG. 3 illustrates a schematic cross-sectional view of a blade of a wind turbine;
FIGS. 4A-B illustrate a system for handling a structural member of a blade of a wind turbine according to embodiments of the present disclosure;
FIG. 5 illustrates a flow diagram of an embodiment of a method of handling a structural member of a blade of a wind turbine according to the present disclosure;
FIGS. 6A-F illustrate schematic views of a system according to an embodiment during operations according to a method of handling a blade; and
FIGS. 7A-B illustrates schematic views of a system including a sanding assembly according to an embodiment of the present disclosure.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

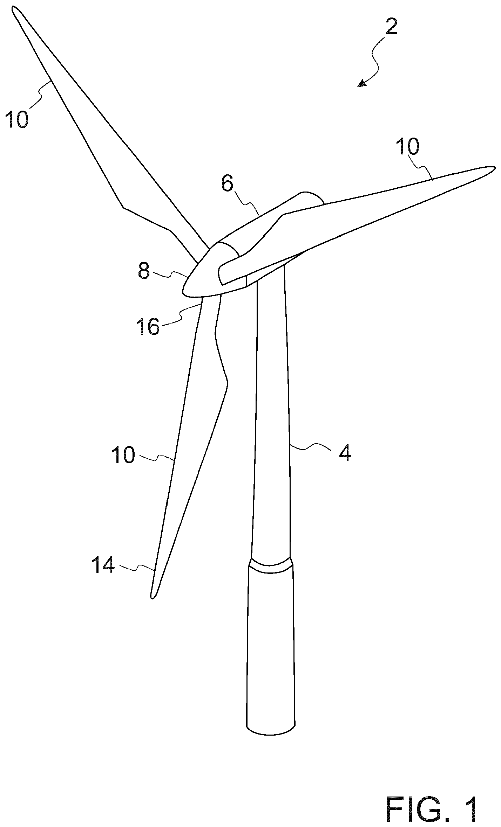

Fig. 1 illustrates a modern upwind wind turbine 2 with a tower 4, a nacelle 6 and a rotor with a substantially horizontal rotor shaft. The rotor includes a hub 8 and three blades 10 extending radially from the hub 8, each blade 10 having a blade root 16 nearest the hub 8 and a blade tip 14 furthest from the hub 8.

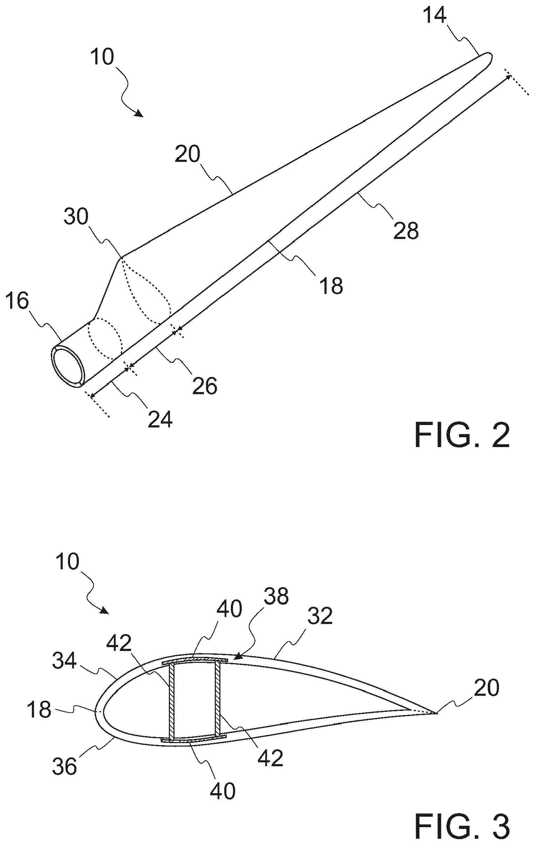

Fig. 2 shows a schematic view of a wind turbine blade 10. The blade 10 includes a root region 24 closest to the hub, an airfoil region 28 furthest away from the hub and a transition region 26 between the root region 24 and the airfoil region 28. The blade 10 includes a leading edge 18 facing the direction of rotation of the blade 10, when the blade 10 is mounted to the hub, and a trailing edge 20 facing the opposite direction of the leading edge 18.

The airfoil region 28 (or profiled region) has a blade shape configured for generating lift, whereas the root region 24 due to structural considerations has a substantially circular or elliptical cross-section, which for instance makes it easier and safer to mount the blade 10 to the hub. The diameter (or the chord) of the root region 24 may be constant along the entire root region 24. The transition region 26 has a transitional profile gradually changing from the circular or elliptical shape of the root region 24 to the airfoil profile of the airfoil region 28. The chord length of the transition region 26 typically increases with increasing distance from the hub. The airfoil region 28 has an airfoil profile with a chord extending between the leading edge 18 and the trailing edge 20 of the blade 10. The width of the chord decreases with increasing distance from the hub. A shoulder 30 of the blade 10 is defined as the position, where the blade 10 has its largest chord length. The shoulder 30 is typically provided at the boundary between the transition region 26 and the airfoil region 28.

FIG. 3 schematically illustrates a cross-section of the blade 10, for example in the airfoil region 28. The blade 10 particularly includes a first shell half 34 bonded with a second shell half 36 of the blade 10. Each of the first shell half 34 and the second shell half 36 provides an outer skin 32 of the blade 10 between the leading edge 18 and the trailing edge 20 of the blade 10. The blade 10 includes a spar 38 extending along a longitudinal blade axis of the blade 10. The spar 38 includes structural members, in particular spar caps 40 and shear webs 42. In Fig. 3, a spar cap 40 is integrated in each of the first shell half 34 and the second shell half 36. Each of the shear webs 42 can be connected to both spar caps 40, particularly connecting the spar caps 40 in a flapwise direction.

Embodiments of the present disclosure particularly relate to handling of a structural member 44 of a blade 10 of a wind turbine 2. In embodiments, the structural member 44 can be a spar cap 40 (or main laminate). A spar cap can have a concave side and/or a convex side, as illustrated for example in Fig. 3. The concave side can be configured for facing towards the inside of the blade 10. The convex side can be configured for facing towards the outside of the blade 10. In further embodiments, the structural member 44 may be a spar cap 40 or a shear web 42.

According to embodiments, the structural member 44 is formed separately from the shell halves of the blade 10. The structural member 44 may include fibers, particularly carbon fibers and/or glass fibers. The fibers may be infused with a resin. In embodiments, the structural member 44 can have a length of more than 50 m, particularly of more than 60 m or more than 70 m. The structural member 44 may have a width in a chordwise direction of at least 0.3 m, particularly of at least 0.4 m, and/or of maximum 1.2 m, particularly of maximum 0.8 m. The structural member 44 can have a weight of at least 0.5 metric tons, particularly of at least one metric ton, and/or of maximum 10 metric tons, particularly of maximum 7 metric tons or maximum 5 metric tons.

After the fabrication of the structural member 44 and before integrating the structural member 44 into a shell half or before joining the structural member 44 to a shell half, the structural member 44 may be post-processed and/or inspected. For example, post-processing of the structural member 44 may include finishing a member surface of the structural member 44. In particular, a member surface of a spar cap may be sanded. Sanding the member surface can for instance improve the adhesion of the spar cap within a shell half, particularly if the spar cap is integrated into the shell half before infusing the shell half with a shell resin. The present disclosure is particularly directed to a system for or a method of handling a structural member 44 for post-processing and/or inspection. More particularly, systems or methods described herein may enable transferring the structural member 44, supporting the structural member 44 and/or accessing more than one side of the structural member 44.

According to embodiments of the present disclosure, a system 50 includes a member support 52 configured for supporting the structural member 44. In particular, the member support 52 can be configured to support the structural member 44 along a longitudinal axis 54 of the member support 52. In embodiments, the member support 52 can include a frame assembly 53 for supporting the structural member 44. The member support 52 may include a plurality of member support segments arranged along the longitudinal axis 54 of the member support 52. In embodiments, the member support 52 can be configured to be positioned on or configured to be mounted to a base 51, for example a floor of a factory hall. In embodiments, the member support 52 may have a length along the longitudinal axis 54 of at least 50 m, particularly of at least 60 m or at least 70 m, and/or of maximum 150 m, particularly of maximum 120 m or maximum 110 m.

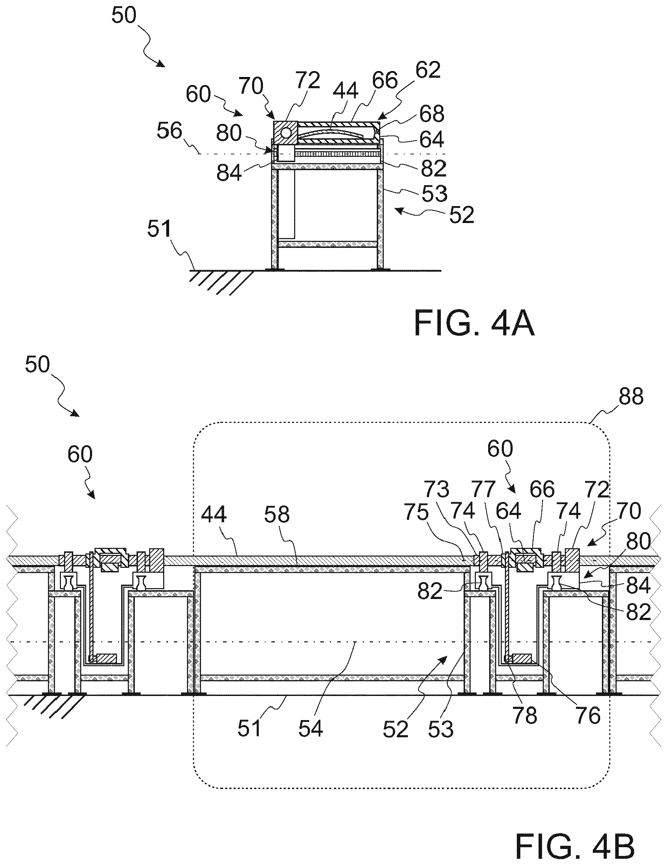

FIGS. 4A-B illustrate a system 50 for handling a structural member 44 according to embodiments of the present disclosure. In particular, FIG. 4A illustrates a view along a direction of a longitudinal axis 54 of a member support 52 of the system 50. FIG. 4B illustrates a view of a part of the system 50, viewing along a direction of a latitudinal axis 56 of the member support 52. In the embodiment of FIGS. 4A-B, the member support 52 includes a frame assembly 53 for supporting the structural member 44, in particular a spar cap. The member support 52 is mounted to a base 51, particularly a floor of a factory hall.

According to embodiments, the system 50 includes a plurality of member turning devices 60 positioned along the longitudinal axis 54 of the member support 52. The plurality of member turning devices 60 can be configured for turning the structural member 44. In particular, the plurality of member turning devices 60 can be configured to turn a structural member 44 from a first orientation, in which a first side of the structural member 44 is in contact with a support surface 58 of the member support 52, to a second orientation, in which a second side of the structural member different from the first side is in contact with the support surface 58. For example, the first side may be a concave side of a spar cap and the second side may be a convex side of the spar cap. As used herein, the first side and the second side may be the sides including the largest surface areas of the structural member 44. Further sides of the structural member 44 may include flanks extending in a longitudinal direction of the structural member 44 between the first side and the second side.

In embodiments, the plurality of member turning devices 60 are connected to the member support 52. Embodiments of the present disclosure may particularly provide turning of the structural member 44 without using an overhead crane. Turning the structural member according to embodiments can reduce a demand for the overhead crane, reduce interruptions of manufacturing operations due to suspended loads and/or increase production efficiency.

According to some embodiments, each member turning device 60 of the plurality of member turning devices 60 includes a gripper 62 configured for gripping the structural member 44. In embodiments, the gripper 62 includes a first gripper arm 64 and a second gripper arm 66. The gripper 62 can be configured to grip the structural member 44 by clamping the structural member 44 between the first gripper arm 64 and the second gripper arm 66. In embodiments, the gripper 62 can include a locking device 68 for locking the first gripper arm 64 and the second gripper arm 66. For example, the locking device 68 may include a pin-pinhole locking mechanism. According to some embodiments, the first gripper arm 64 and the second gripper arm 66 may be individually controllable, particularly individually rotatable relative to each other.

In embodiments, each member turning device 60 of the plurality of member turning devices 60 includes a rotation device 70 configured for rotating the gripper 62, particularly the gripper 62 and the structural member 44. According to some embodiments, the rotation device 70 is configured for rotating the gripper 62 about a rotation axis 75 of the rotation device 70. The rotation axis 75 can be at least substantially parallel to the longitudinal axis 54 of the member support 52. In particular, the rotation device 70 can be configured to pivot the gripper 62 about the rotation axis 75. In some embodiments, the rotation device 70 includes a first motor 72 configured for rotating a first gripper arm 64 of the gripper 62, and a second motor 76 configured for rotating a second gripper arm 66 of the gripper 62. At least one of the first motor 72 and the second motor 76 can be configured for rotating the first gripper arm 64 together with the second gripper arm 66, particularly when the first gripper arm 64 is locked with the second gripper arm 66.

For example, FIGS. 4A-B illustrate a member turning device 60 including a gripper 62 and a rotation device 70 configured for rotating the gripper 62 about rotation axis 75. In particular, the gripper 62 includes a first gripper arm 64 and a second gripper arm 66. The first gripper arm 64 and the second gripper arm 66 are individually controllable. As shown in FIG. 4B, the first gripper arm 64 can be mounted to a first shaft 73 of a first motor 72 of the rotation device 70. The second gripper arm 66 can be mounted to a second shaft 77, the second shaft 77 being rotatable relative to the to the first shaft 73 and connected to the first shaft 73 via a bearing. The second shaft 77 can be rotated by a second motor 76 of the rotation device 70. In particular, the second shaft 77 is coupled to the second motor 76 via a belt 78. If the first gripper arm 64 and the second gripper arm 66 are locked by locking device 68, the first gripper arm 64 and the second gripper arm 66 can be rotated together, particularly by the first motor 72. As shown in FIG. 4B, more than one member turning devices 60 are arranged along the longitudinal axis 54 of the member support 52.

In some embodiments, the system 50 may include a plurality of support and turning modules 88. Each support and turning module 88 may include a member turning device 60 and a member support segment of the member support 52. For example, as shown in FIG. 4B, the system 50 may include a plurality of support and turning modules 88 arranged along the longitudinal axis 54 of the member support 52, particularly as an array of a plurality of support and turning modules 88.

According to some embodiments, an axial distance along the longitudinal axis 54 of the member support 52 between two adjacent member turning devices 60 of the plurality of member turning devices 60 is maximum 20 m, particularly maximum 15 m or maximum 10 m, and/or minimum 3 m, particularly minimum 4 m or minimum 4.5 m. In some embodiments, the plurality of member turning devices 60 are positioned at regular axial distances. For example, the plurality of member turning devices 60 may be positioned regularly at an axial distance of approximately 5 m along the longitudinal axis 54. In further embodiments, the plurality of member turning devices 60 may be positioned at irregular axial distances.

In some embodiments, the plurality of member turning devices 60 includes at least 5 member turning devices 60, particularly at least 10 or at least 12, and/or maximum 40 member turning devices 60, particularly maximum 30 or maximum 25.

According to embodiments, each member turning device 60 includes an actuator 80 connected to the member support 52, the actuator 80 being configured for translating the rotation device 70. In some embodiments, the actuator 80 is configured for translating the rotation device 70 along a latitudinal axis 56 of the member support 52. The latitudinal axis 56 can be at least substantially perpendicular to the longitudinal axis 54 of the member support and particularly at least substantially perpendicular to a vertical axis, the vertical axis being parallel to a direction of gravity. The actuator 80 may include a linear actuator configured for translating the rotation device 70 along the latitudinal axis 56. The actuator 80 can include a static part 82, e.g., a rail extending in a direction of the latitudinal axis 56, and a traveling part 84 configured to move along the static part 82. The static part 82 can be rigidly coupled to the member support 52. The traveling part 84 can be rigidly coupled to the rotation device 70, particularly to one or more stators of the rotation device 70. One or more rotors of the rotation device 70 can be rotationally coupled or rotationally fixed with respect to the gripper 62 or with respect to a part of the gripper 62, particularly with respect to a first gripper arm 64 and/or with respect to a second gripper arm 66. The rotation device 70 can be configured for rotating the gripper 62 by rotating the one or more rotors relative to the respective one or more stators.

For example, in FIGS. 4A-B each member turning device 60 includes an actuator 80 having rails mounted to the member support 52 as a static part 82, and a traveling part 84 configured to move along the rails in a direction of the latitudinal axis 56. The rotation device 70 is mounted onto the traveling part 84 of the actuator 80. In particular, the stators of the first motor 72 and of the second motor 76, and bearings 74 for the first shaft 73 are rigidly connected with the traveling part 84. The rotor of the first motor 72 is rotationally fixed via the first shaft 73 with respect to the first gripper arm 64. The rotor of the second motor 76 is rotationally coupled to the second gripper arm 66 via the belt 78 and the second shaft 77. Member turning devices 60 according to some embodiments of the present disclosure may particularly provide rotation and translation of the grippers 62 and the structural member 44.

In embodiments, the system 50 includes a control system, the control system particularly being configured for performing operations for turning the structural member 44, operations for processing the structural member 44 according to embodiments described herein, and/or any operations of methods described herein. In particular, the operations for turning the structural member 44 may include any motion operations described herein. More specifically, the operations can include any operations performed by the grippers 62, the rotation devices 70 and/or the actuators 80.

In some embodiments, the control system is connected to the plurality of member turning devices 60 and/or further devices such as a sanding assembly described herein. The control system may include a central processing unit (CPU), a computer-readable medium and, for example, support circuits. To facilitate control of the system 50, the CPU may be one of any form of general purpose computer processor that can be used in an industrial setting for controlling various components and sub-processors. The computer-readable medium is coupled to the CPU. The computer readable medium or memory may be one or more readily available memory devices such as random access memory, read only memory, floppy disk, hard disk, or any other form of digital storage either local or remote. The support circuits may be coupled to the CPU for supporting the processor in a conventional manner. These circuits include cache, power supplies, clock circuits, input/output circuitry and related subsystems, and the like. Instructions for operations of turning the structural member 44 and/or instructions for operations of processing the structural member 44 are generally stored in the computer-readable medium as a software routine typically known as a recipe. The software routine may also be stored and/or executed by a second CPU that is remotely located from the hardware being controlled by the CPU. The software routine, when executed by the CPU, transforms the general purpose computer into a specific purpose computer (controller or control system) that controls the system 50, and can provide for turning the structural member 44 and/or processing the structural member 44 according to any of the embodiments of the present disclosure. Although operations or methods of the present disclosure are discussed as being implemented as a software routine, some of the method operations that are disclosed therein may be performed in hardware as well as by the software controller. As such, the embodiments may be implemented in software as executed upon a computer system, and in hardware as an application specific integrated circuit or other type of hardware implementation, or a combination of software and hardware. The control system may particularly execute or perform operations of turning and/or processing the structural member, and/or a method of handling a structural member 44 according to embodiments described herein.

According to embodiments described herein, the operations and/or methods of the present disclosure can be conducted using computer programs, software, computer software products and the interrelated controllers, which can have a CPU, a computer readable medium or memory, a user interface, and input and output devices being in communication with the corresponding components of the system 50 according to embodiments described herein.

According to some embodiments, the rotation devices 70 of the plurality of member turning devices 60 are configured for rotating the grippers 62 of the plurality of member turning devices 60 in synchronized motion. A synchronized motion may be understood as a synchronous motion sequence. In particular, synchronized motion may include performing the same motion at the same time, particularly with respect to the direction, speed and duration of the motion. Synchronized motion may for example be controlled by a control system of the system 50 according to embodiments described herein.

In embodiments, the actuators 80 of the plurality of member turning devices 60 are configured for translating the rotation devices 70 of the plurality of member turning devices 60 in synchronized motion. Synchronized motion of the rotation devices 70 and/or of the actuators can distribute loads between the plurality of member turning devices 60 and/or reduce stress or bending of the structural member 44.

In some embodiments, the grippers 62 of the plurality of member turning devices 60 are configured to grip the structural member 44 in synchronized motion. A synchronized gripping motion can for example increase the overall speed of turning the structural member 44. In further embodiments, the grippers 62 may grip the structural member 44 in asynchronized motion.

According to embodiments, the plurality of member turning devices 60 is configured for turning the structural member 44, wherein turning the structural member 44 includes gripping the structural member 44 using the grippers 62 of the plurality of member turning devices 60, rotating the grippers 62 using the rotation devices 70 of the plurality of member turning devices 60, and translating the rotation devices 70 using the actuators 80 of the plurality of member turning devices 60. Operations of rotating and translating may be performed in various ways, particularly as sequential motions, as a mixed motion or as a combination of sequential motions and mixed motions. The operations may be controlled for example by the control system of the system 50.

In some embodiments, the plurality of member turning devices 60 is configured for transferring the structural member 44 between a support surface 58 of the member support 52 and a member transport device 86 positioned at least substantially parallel to the longitudinal axis 54 of the member support 52. For example, the member transport device 86 may be a transport trolley for transporting the structural member 44 to the system 50 or away from the system 50. For transferring the structural member 44, the member transport device 86 may be positioned at a transfer position at a distance of maximum 1.5 m from the member support 52, particularly of maximum 1 m or maximum 0.5m.

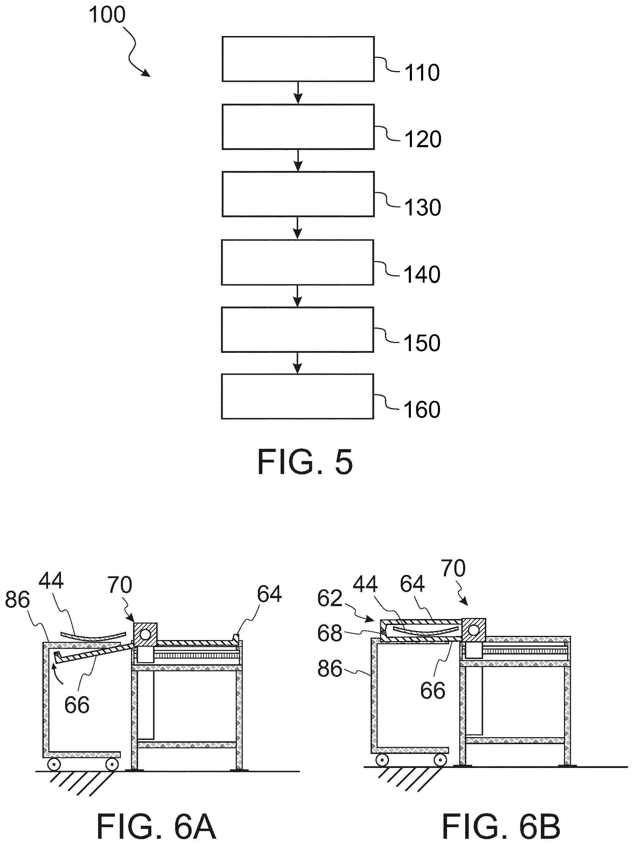

FIG. 5 illustrates a flow diagram of a method 100 of handling a structural member 44. According to some embodiments, methods described herein may be performed using a system 50 for handling a structural member 44 according to embodiments of the present disclosure. In the following, the method 100 will be explained in conjunction with FIGS. 6A-F, which illustrate a system 50 in various states of handling a structural member 44 according to embodiments described herein.

At block 110, the method 100 can include positioning a structural member 44 at least substantially parallel to a longitudinal axis 54 of the member support 52. The structural member 44 can be positioned at a transfer position using a member transport device 86, for example a transport trolley as shown in FIG. 6A. The member transport device 86 may have a plurality of transport arms for supporting the structural member 44. The first gripper arm 64 and the second gripper arm 66 may be rotated using the rotation device 70 to angular positions around the transfer position, particularly before positioning the structural member 44.

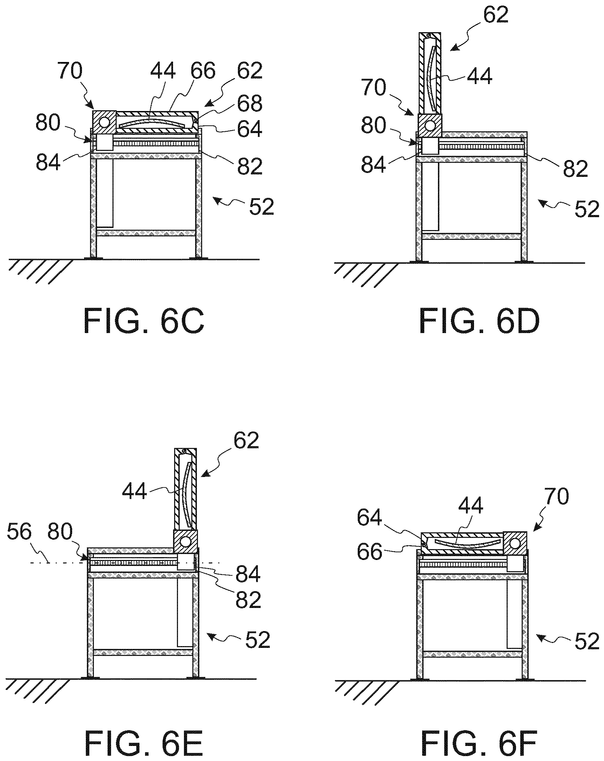

At block 120, the method 100 can include transferring the structural member 44 from the member transport device 86 to a support surface 58 of the member support 52. Transferring may include gripping the structural member 44 using the grippers 62. For example, as shown in FIG. 6B, the rotation devices 70 may rotate the first gripper arm 64 and the second gripper arm 66 to clamp the structural member 44 between the first gripper arm 64 and the second gripper arm 66. The first gripper arm 64 and the second gripper arm 66 may be locked using locking device 68. Transferring can include rotating or pivoting the gripper 62 using the rotation device 70 onto a support surface 58 of the member support 52, as illustrated for example in FIG. 6C.

At block 130, the method 100 includes supporting the structural member 44 on the member support 52, particularly on a support surface 58 of the member support 52. Supporting the structural member 44 may include releasing the structural member 44 from the grippers 62, e.g. by releasing the locking devices 68 of the grippers 62 and/or by rotating the second gripper arms 66 away from the first gripper arms 64. In particular, the first gripper arm 64 and the second gripper arm 66 may fold away to provide full access to at least one side of the structural member 44. For example, a first side of the structural member 44, e.g. a concave side, may be in contact with the member support 52. A second side of the structural member, e.g. a convex side, and/or at least one flank of the structural member 44 may be accessible, e.g. for inspection or for processing.

At block 140, the method 100 includes turning the structural member 44 using the plurality of member turning devices 60. In particular, the structural member 44 can be turned from a first orientation, in which a first side of the structural member 44 is in contact with a support surface 58 of the member support 52, to a second orientation, in which a second side of the structural member 44 different from the first side is in contact with the support surface 58. In embodiments, turning the structural member 44 includes gripping the structural member 44 using the grippers 62. In particular, the first gripper arm 64 and the second gripper arm 66 may be closed around the structural member 44. The locking device 68 may lock the first gripper arm 64 and the second gripper arm 66.

In embodiments, turning the structural member 44 includes rotating the grippers 62 and particularly the structural member 44 using the rotation devices 70. In particular, the grippers 62 and the structural member 44 may be rotated by a first angle. In embodiments, the first angle may be less than 180 degrees, e.g. approximately 90 degrees such that the grippers 62 are oriented in an at least substantially vertical orientation. In FIG. 6D, the grippers 62 and the structural member 44 are rotated to a vertical orientation.

In some embodiments, turning the structural member 44 includes translating the rotation devices 70 using actuators 80 of the plurality of member turning devices 60. In particular, the rotation devices 70 may be translated after rotation of the grippers 62 by the first angle. The rotation device 70, the grippers 62 and the structural member 44 may be translated in a direction of the latitudinal axis 56 of the member support 52. The actuators 80 may translate the rotation devices 70 from a first latitudinal position in a first latitudinal end region of the member support 52 to a second latitudinal position in a second latitudinal end region of the member support 52, the second latitudinal end region being at the opposite latitudinal end of the member support 52 with respect to the first latitudinal end region. For example, in FIG. 6E the rotation devices 70, the grippers 62 and the structural member 44 have been translated using the actuators 80. In particular, translating can include moving a traveling part 84 of an actuator 80, the traveling part 84 being rigidly connected with a rotation device 70, from a first latitudinal position (FIG. 6D) along a static part 82 of the actuator 80 to a second latitudinal position (FIG. 6E).

According to embodiments, turning the structural member 44 can include rotating the grippers 62 and particularly the structural member 44 using the rotation devices 70 after translating the rotation devices 70. In particular, the grippers 62 may be rotated by a second angle, the second angle being e.g. approximately 180 degrees minus the first angle. The grippers 62 may be rotated to place the structural member 44 on the support surface 58 of the member support 52, particularly with the second side of the structural member 44 in contact with the support surface 58 of the member support 52. As illustrated for example in FIG. 6F, the grippers 62 may be rotated from an at least substantially vertical orientation by a second angle of 90 degrees to place the structural member 44 onto the member support 52. Combining rotational motion by the rotation devices and translational motion by the actuators according to embodiments of the present disclosure can particularly reduce a footprint or save space for turning a structural member during inspection or processing of the structural member. In particular, the structural member may be positioned in the same latitudinal regions or in overlapping latitudinal regions before and after turning. According to some embodiments, the member support 52 is narrower in a direction of the latitudinal axis 56 than 2.5 m, particularly narrower than 2 m or narrower than 1.5 m. For example, the member support 52 may be dimensioned narrower than twice the width of the structural member 44 to be inspected or processed on the member support 52.

At block 150, the method 100 can include supporting the structural member 44 on the member support 52. In particular, supporting the structural member 44 may include releasing the structural member 44 from the grippers 62, for example by releasing the locking device 68 and/or by rotating the first gripper arm away from the second gripper arm 66. The first side of the structural member 44, e.g. a concave side, and/or at least one flank of the structural member 44 may be accessed, e.g. for inspection or for processing.

At block 160, the method 100 can include transferring the structural member 44 from the member support 52 to a member transport device 86. Transferring may include gripping the structural member 44 using the grippers 62 and rotating the grippers 62 using the rotation devices 70. Depending on the position of the member transport device 86, transferring may include translating the rotation devices 70 using the actuators 80. In further embodiments, the structural member 44 may be lifted off the member support 52 using an overhead crane, for example to place the structural member 44 into a shell half of a blade 10.

According to embodiments of the present disclosure, a system 50 may be configured for processing the structural member 44, particularly configured for sanding the structural member 44. A sanded surface of a structural member 44, particularly of a spar cap, may particularly promote adhesion of the structural member 44 with a shell resin of a shell half, for example if the structural member 44 is integrated within the shell half before infusing the shell half with the shell resin. It should be understood that the system 50 may be combined with embodiments for handling the structural member 44 disclosed herein.

According to some embodiments, the system 50 includes a sanding assembly 90. The sanding assembly 90 can be configured for moving a sanding head 95 of the sanding assembly 90 in a direction of the longitudinal axis 54 of the member support 52. The sanding head 95 can be configured for sanding the structural member 44 supported on the member support 52, particularly while moving in the direction of the longitudinal axis 54. In embodiments, the sanding assembly 90 can include guiderails 92 arranged in a direction of the longitudinal axis 54 of the member support 52. For example, at least one guiderail 92 may be arranged in a direction of the longitudinal axis 54 on either side along the member support 52. The sanding head 95 can include a carriage 93 configured for moving along the guiderails 92. The carriage 93 may include a carriage motor to drive the carriage 93 along the guiderails 92. In some embodiments, the carriage 93 includes a carriage frame 94 bridging from a first guiderail on a first member support side of the member support 52 over the member support 52 to a second guiderail on a second member support side of the member support 52 different from the first member support side.

In embodiments, the carriage 93 carries at least one sanding device mounted to the carriage frame 94. The at least one sanding device may be arranged vertically above the member support 52. The at least one sanding device can include a first sanding device 96 configured for sanding a first side and/or a second side of the structural member 44. The at least one sanding device can include a flank sanding device 98 configured for sanding a flank of the structural member 44. In some embodiments, the at least one sanding device includes a first sanding device 96 configured for sanding a first side of the structural member 44, e.g. a concave side, and a second sanding device 97 configured for sanding a second side of the structural member 44, e.g. a convex side. Each of the first sanding device 96, the second sanding device 97 and/or the flank sanding device 98 may include a sanding brush, particularly a rotatable sanding brush. A rotatable sanding brush may include for example a rotor and sanding sheets mounted to the rotor. The rotor may be driven by a sanding head motor of the at least one sanding device. A sanding brush configured for sanding a concave side may have a generally convex outer envelope. A sanding brush configured for sanding a convex side may have a generally concave outer envelope.

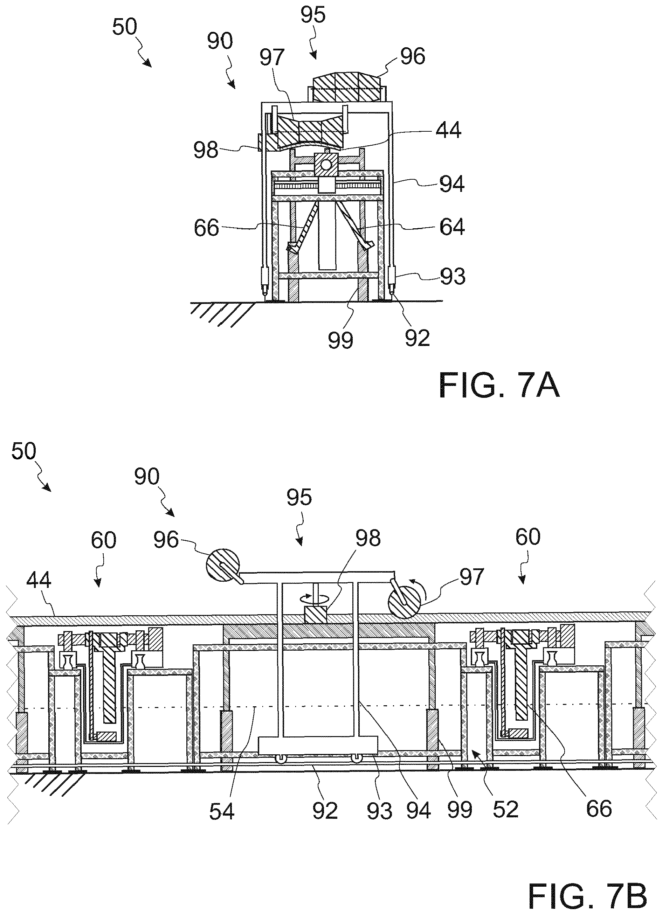

FIGS. 7A-B illustrate a system 50 including a member support 52 and a plurality of member turning devices 60 according to embodiments described herein, and a sanding assembly 90. Guiderails 92 of the sanding assembly 90 are arranged in a direction of the longitudinal axis 54 of the member support 52. A carriage 93 of a sanding head 95 of the sanding assembly 90 includes wheels for moving along the guiderails 92 and a carriage motor for driving the wheels. The carriage 93 includes a carriage frame 94 bridging over the member support 52. The carriage frame 94 carries sanding devices. The sanding devices include a first sanding device 96 configured for sanding a concave side of the structural member 44, and a second sanding device 97 configured for sanding a convex side of the structural member 44. A flank sanding device 98 of the sanding devices is configured for sanding a flank of the structural member 44.

In some embodiments, the member support 52 includes a lifting device 99. The lifting device 99 can be configured for raising and/or lowering the structural member 44 in a vertical direction. The lifting device 99 may include a support surface 58 for supporting the structural member 44. In particular, the lifting device 99 may be configured to raise the structural member 44 in a vertical direction above the plurality of member turning devices 60. The lifting device 99 can be configured for raising the structural member 44 up to a vertical position of the at least one sanding device, particularly up to the first sanding device 96, the second sanding device 97 and/or the flank sanding device 98.

In some embodiments, the sanding head 95 may include a vertical actuator for individually raising or lowering the first sanding device 96, the second sanding device 97 and/or the flank sanding device 98. For example, the first sanding device 96 may be positioned vertically at a lower position than the second sanding device 97, particularly such that the first sanding device 96 can sand the first side of the structural member 44. After sanding the first side and turning the structural member 44, the first sanding device 96 may be raised and the second sanding device 97 may be lowered to a lower position than the first sanding device 96 for sanding the second side of the structural member 44. In further embodiments, the first side may be sanded after the second side.

In some embodiments, the lifting device 99 is configured for supporting the structural member 44 at a first latitudinal position of the member support 52, if the first side, particularly a concave side, of the structural member 44 is in contact with the lifting device 99. The lifting device 99 can be configured for supporting the structural member 44 at a second latitudinal position of the member support 52, if the second side of the structural member 44, particularly a convex side, is in contact with the lifting device 99, the second latitudinal position being offset in a direction of the latitudinal axis 56 from the first latitudinal direction. The first sanding device 96 may be positioned on the sanding head at the first latitudinal position. The second sanding device 97 may be positioned on the sanding head 95 at the second latitudinal position.

According to embodiments of the present disclosure, a method 100 may include processing the structural member 44, particularly during supporting the structural member 44 on the member support 52 (e.g. at blocks 130 and/or 150 in FIG. 5). After releasing the structural member 44 from the grippers 62, the lifting device 99 may raise the structural member 44 above the member turning devices 60. The plurality of member turning devices 60 may be positioned in a resting pose. For example, the actuators 80 may translate the rotation devices 70 to a central latitudinal position. The rotation devices 70 may rotate the first gripper arm 64 and the second gripper arm 66 to point in a downward direction, as illustrated for instance in FIGS. 7A-B.

In embodiments, processing the structural member 44 may include sanding the second side and/or a flank of the structural member 44 using the sanding assembly 90, e.g. at block 130 in FIG. 5. The sanding head 95 may move along the structural member 44 in a direction of the longitudinal axis 54 of the member support 52, while the second sanding device 97 can sand the second side of the structural member 44 and/or the flank sanding device 98 can sand a flank of the structural member 44. After sanding, the sanding head 95 may be positioned at a longitudinal end position away from the structural member 44 and/or away from the plurality of member turning devices 60. The plurality of member turning devices 60 may be moved out of the central latitudinal position. The lifting device 99 may lower the structural member 44. After lowering the structural member 44, the plurality of member turning devices 60 may turn the structural member 44, e.g. at block 140 of FIG. 5.

In embodiments, processing the structural member 44 may include sanding the first side of the structural member 44 using the sanding assembly 90 and/or at least one flank of the structural member 44, particularly at block 150. After turning the structural member 44, the lifting device 99 may raise the structural member 44. The plurality of member turning devices 60 may be positioned in the resting pose. The sanding head 95 may move along the structural member 44 in a direction of the longitudinal axis 54 of the member support 52, while the first sanding device 96 can sand the first side of the structural member 44 and/or the flank sanding device 98 can sand a flank of the structural member 44, e.g. as illustrated in FIGS. 7A-B. After sanding, the sanding head 95 may be positioned at the longitudinal end position away from the structural member 44 and/or away from the plurality of member turning devices 60. The plurality of member turning devices 60 may be moved out of the central latitudinal position. The lifting device 99 can lower the structural member 44. After processing and/or inspecting the structural member 44, the structural member 44 may be transferred away from the system 50, e.g. at block 160.

The various embodiments of the system and the method may advantageously provide handling of a structural member of a blade of a wind turbine for inspection or processing of the structural member. In particular, embodiments of the present disclosure may enable handling of the structural member without using an overhead crane. A demand for an overhead crane in blade production may be decreased. Embodiments may reduce interruptions of operations due to the presence of suspended loads. Handling of the structural member according to embodiments may for example enable higher efficiency in blade production. Furthermore, embodiments can advantageously provide access to all sides of the structural member, e.g. for access by operators or by processing devices such as a sanding assembly. In particular, processing such as sanding may be performed more efficiently. Embodiments may have a small footprint, particularly with respect to a space required for handling the structural member.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A system (50) for handling a structural member (44) of a blade (10) of a wind turbine (2), comprising:
- a member support (52) configured for supporting the structural member (44); and
- a plurality of member turning devices (60) positioned along a longitudinal axis (54) of the member support (52), the plurality of member turning devices (60) being connected to the member support (52) and configured for turning the structural member (44).

2. The system (50) of claim 1, wherein each member turning device (60) of the plurality of member turning devices (60) comprises a gripper (62) configured for gripping the structural member (44), and a rotation device (70) configured for rotating the gripper (62).

3. The system (50) of claim 2, wherein the rotation device (70) is configured for rotating the gripper (62) about a rotation axis (75) of the rotation device (70), the rotation axis (75) being at least substantially parallel to the longitudinal axis (54) of the member support (52).

4. The system (50) of any one of claims 2 and 3, wherein each member turning device (60) comprises an actuator (80) connected to the member support (52), the actuator (80) being configured for translating the rotation device (70).

5. The system (50) of claim 4, wherein the actuator (80) is configured for translating the rotation device (70) along a latitudinal axis (56) of the member support (52), the latitudinal axis (56) being at least substantially perpendicular to the longitudinal axis (54) of the member support (52).

6. The system (50) of any one of claims 2 to 5, wherein the rotation devices (70) of the plurality of member turning devices (60) are configured for rotating the grippers (62) of the plurality of member turning devices (60) in synchronized motion; and/or wherein the grippers (62) of the plurality of member turning devices (60) are configured to grip the structural member (44) in synchronized motion.

7. The system (50) of any one of claims 4 to 6, wherein the actuators (80) of the plurality of member turning devices (60) are configured for translating the rotation devices (70) of the plurality of member turning devices (60) in synchronized motion.

8. The system (50) of any one of claims 4 to 7, wherein turning the structural member (44) comprises gripping the structural member (44) using the grippers (62) of the plurality of member turning devices (60), rotating the grippers (62) using the rotation devices (70) of the plurality of member turning devices (60), and translating the rotation devices (70) using the actuators (80) of the plurality of member turning devices (60).

9. The system (50) of any one of claims 1 to 8, wherein the plurality of member turning devices (60) is configured for transferring the structural member (44) between a support surface (58) of the member support (52) and a member transport device (86) positioned at least substantially parallel to the longitudinal axis (54) of the member support (52).

10. The system (50) of any one of claims 2 to 9, wherein the gripper (62) comprises a first gripper arm (64) and a second gripper arm (66), the gripper (62) being configured to grip the structural member (44) by clamping the structural member (44) between the first gripper arm (64) and the second gripper arm (66).

11. The system (50) of any one of claims 1 to 10, wherein an axial distance along the longitudinal axis (54) of the member support (52) between two adjacent member turning devices (60) of the plurality of member turning devices (60) is maximum 20 m.

12. The system (50) of any one of claims 1 to 11, further comprising a sanding assembly (90), wherein the sanding assembly is configured for moving a sanding head (95) of the sanding assembly (90) in a direction of the longitudinal axis (54) of the member support (52), the sanding head (95) being configured for sanding the structural member (44) supported on the member support (52).

13. A method (100) of handling a structural member (44) of a blade (10) of a wind turbine (2), comprising:
- supporting the structural member (44) on a member support (52); and
- turning the structural member (44) using a plurality of member turning devices (60) positioned along a longitudinal axis (54) of the member support (52), the plurality of member turning devices (60) being connected to the member support (52).

14. The method (100) of claim 13, wherein each member turning device (60) of the plurality of member turning devices (60) comprises a gripper (62) and a rotation device (70), and wherein turning the structural member (44) comprises:
- gripping the structural member (44) using the grippers (62) of the plurality of member turning devices (60), and
- rotating the grippers (62) using the rotation devices (70) of the plurality of member turning devices (60).

15. The method (100) of claim 14, wherein each member turning device (60) further comprises an actuator (80) connected to the member support (52), and wherein turning the structural member (44) comprises:
- translating the rotation devices (70) using the actuators (80) of the plurality of member turning devices (60).
